# EUROPÄISCHE PATENTSCHRIFT

(11) **EP 2 500 161 B1**
(45) Veröffentlichungstag und Bekanntmachung des Hinweises auf die Patenterteilung: **21.06.2017**
(21) Anmeldenummer: 12156584.0
(22) Anmeldetag: 22.02.2012
(51) Int. Cl.: B29C 65/16, B29C 65/78, B29L 31/30, B29L 31/34, G01S 7/521

(54) **Vorrichtung zum Verbinden zweier aus Kunststoff bestehender Bauteile mittels eines Laserstrahls**
Device for connecting two plastic components by means of a laser beam
Dispositif de connexion de deux composants en matière plastique à l'aide d'un faisceau laser

(30) Priorität: 17.03.2011 DE 102011005683
(43) Veröffentlichungstag der Anmeldung: 19.09.2012
(73) Patentinhaber: Robert Bosch GmbH, 70442 Stuttgart (DE)
(72) Erfinder: Zaegel, Didier, 67400 Illkirch (FR)

(56) Entgegenhaltungen:
- EP-A2- 1 842 654
- DE-A1-102007 044 590

## Beschreibung

### Stand der Technik

Die Erfindung betrifft eine Vorrichtung zum Verbinden zweier aus Kunststoff bestehender Bauteile mittels eines Laserstrahls nach dem Oberbegriff des Anspruchs 1. Ferner betrifft die Erfindung eine Verwendung einer erfindungsgemäßen Vorrichtung.

Beispielsweise bei Gehäusen von Steuergeräten in der Kraftfahrzeugindustrie hat es sich bewährt, die aus einem Gehäusegrundteil und einem mit dem Gehäusegrundteil verbundenen Deckel bestehenden Gehäuse mittels eines Laserstrahls im Laserdurchstrahlverfahren zu verschweißen. Dabei wird der Deckel auf das Grundteil aufgelegt und beispielsweise durch einen Niederhaltestempel mit einer bestimmten Kraft in Richtung des Gehäusegrundteils beaufschlagt, damit der Deckel sich im Anlagekontakt mit dem Grundteil befindet, worauf anschließend ein Laserstrahl, dessen Strahlung für den Deckel durchlässig ist, auf die Fügezone zwischen dem Grundelement und dem Deckel gerichtet wird. Durch die Anlagekraft des Niederhalteelements findet beim Aufschmelzen des Kunststoffes im Bereich der Fügezone ein Verdrängen des aufgeschmolzenen Kunststoffes nach innen bzw. außen statt. Während die nach innen, d.h. in das Gehäuseinnere verdrängte Kunststoffmasse in der Regel unkritisch ist, da diese weiterhin am Gehäusegrundelement anhaftet, und somit nicht zur Funktionsbeeinträchtigungen führt sowie optisch von außen nicht erkennbar ist, ist es zur Vermeidung einer störenden Optik beim Stand der Technik vorgesehen, den Außenbereich des Deckels radial bis über den Bereich des Gehäusegrundelements auszubilden und ggf. zusätzlich mit einem in Richtung des Gehäusegrundelements ragenden und die Fügezone überdeckenden, insbesondere umlaufenden Rand, zu versehen. Nachteilig dabei ist, dass durch die Vergrößerung des Deckels die Größe des Bauteils bzw. des Gehäuses insgesamt vergrößert wird und zusätzliches Material für die (vergrößerte) Ausbildung des Deckels benötigt wird.

Aus der EP 1 842 654 A2 ist eine Vorrichtung mit den Merkmalen des Oberbegriffs des Anspruchs 1 bekannt. Bei der bekannten Vorrichtung werden zwei schalenförmige Bauteile mittels einer Laserstrahlschweißeinrichtung miteinander in einer Verbindungszone verschweißt. Die beiden Bauteile werden in ein ebenfalls schalenförmiges Hilfswerkzeug eingelegt, das den Verbindungsbereich der beiden Bauteile an dessen Umfang umgibt bzw. an diesem anliegt. Nachteilig dabei ist, dass das Einführen der beiden Bauteile in das schalenförmige Hilfswerkzeug dadurch erschwert ist, dass der Querschnitt der Öffnung des Hilfswerkzeugs exakt dem Umfang bzw. der Kontur der beiden Bauteile angepasst ist, so dass die beiden Bauteile mit hoher Präzision in das Hilfswerkzeug eingeführt werden müssen, um eine Kollision mit dem Hilfswerkzeug zu vermeiden.

Aus der DE 10 2007 044 590 A1 ist darüber hinaus eine Vorrichtung mit einem rahmenförmigen Element (Fig. 7, 8) bekannt, bei dem zwischen dem Hilfswerkzeug und den miteinander zu verbindenden Bauteilen im Verbindungsbereich der Bauteile ein geringer Umfangsspalt ausgebildet ist. Die aus der genannten Schrift bekannte Vorrichtung ermöglicht es im Gegensatz zu der zuletzt genannten Schrift nicht, ein Austreten von aufgeschmolzenem Material aus dem Verbindungsbereich der beiden Bauteile nach außen hin vollständig zu vermeiden.

### Offenbarung der Erfindung

Ausgehend von dem dargestellten Stand der Technik liegt der Erfindung die Aufgabe zugrunde, eine Vorrichtung nach dem Oberbegriff des Anspruchs 1 derart weiterzubilden, dass ein verbessertes bzw. vereinfachtes Handling der Vorrichtung ermöglicht wird. Diese Aufgabe wird erfindungsgemäß bei einer Vorrichtung mit den Merkmale des Anspruchs 1 dadurch gelöst, dass das wenigstens eine Abdichtelement vorzugsweise mehrteilig ausgebildet ist, und dass die Bestandteile des wenigstens einen Abdichtelements an dem Trägerelement schwenkbar angeordnet sind, oder dass das Abdichtelement einteilig ausgebildet ist und eine Zentrierhilfe zum Erleichtern des Entlangbewegens entlang der Außenkontur der Bauteile, vorzugsweise in Form einer Einführschräge, aufweist.

Vorteilhafte Weiterbildungen der erfindungsgemäßen Vorrichtung zum Verbinden zweier aus Kunststoff bestehender Bauteile mittels eines Laserstrahls sind in den Unteransprüchen aufgeführt.

Besonders bevorzugt ist es weiterhin, wenn das zweite Bauteil während des Verschweißens auf das erste Bauteil mit einer Kraft gedrückt wird. Dadurch wird ein sicherer Anlagekontakt und somit eine besonders sichere und vollständige Verbindung der beiden Bauteile erzielt.

Um trotz des Laserstrahls eine Vorrichtung ausbilden zu können, bei der das Abdichtelement aus Richtung der miteinander zu verbindenden Bauteile und des Laserstrahls in Überdeckung mit den Bauteilen gebracht werden kann, wird darüber hinaus vorgeschlagen, dass das Trägerelement beim Verbinden der beiden Bauteile das zweite Bauteil überdeckt und zumindest einen für den Laserstrahl durchlässigen Bereich aufweist. Ein derartiger durchlässiger Bereich kann beispielsweise dadurch gebildet werden, dass das Trägerelement als Glasplatte ausgebildet wird.

Ganz besonders bevorzugt ist eine konstruktive Ausbildung der Vorrichtung, bei der das Trägerelement auf der dem zweiten Bauteil zugewandten Seite ein Niederhalteelement aufweist, und dass das Niederhalteelement beim Verbinden der beiden Bauteile eine Auflage an dem zweiten Bauteil bildet, die außer Deckung mit der Fügezone angeordnet ist. Dadurch bleibt insbesondere der Randbereich des ersten Bauteils, der zum Verbinden mit dem zweiten, deckelförmigen Bauteil dient, von dem Niederhalteelement frei, sodass der Laserstrahl ungehindert in den Bereich der Fügezone eindringen kann.

Ganz besonders bevorzugt ist die Verwendung einer erfindungsgemäßen Vorrichtung zum Verbinden zweier Bauteile, bei denen das zweite, deckelförmige Bauteil im Fügebereich mit dem ersten Bauteil eine Außenkontur aufweist, die der Form des ersten Bauteils angepasst ist und diese insbesondere nicht nach außen hin überragt. Dadurch wird ein besonders kompakter Aufbau der aus den beiden Bauteilen bestehenden Baugruppe erzielt.

Besonders bevorzugt ist eine Verwendung, bei der die Bauteile ein Gehäuse für ein elektrisches oder elektronisches Gerät bilden.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Vorrichtung zum Verbinden zweier Bauteile gemäß dem Stand der Technik in einer vereinfachten Seitenansicht,
- Fig. 2: den Verbindungsbereich zweier Bauteile zur Verwendung bei einer Vorrichtung gemäß Fig. 1, ebenfalls in vereinfachter Seitenansicht,
- Fig. 3: eine erste erfindungsgemäße Vorrichtung zum Verbinden zweier Bauteile mittels eines Laserstrahls in vereinfachter Seitenansicht,
- Fig. 4: eine Anordnung aus zwei Bauteilen, wie diese mit der Vorrichtung gemäß der Fig. 3 verbunden werden, in vereinfachter Seitenansicht,
- Fig. 5: eine Ansicht eines beispielhaften Gehäuses für einen Ultraschallsensor in Explosionsdarstellung, wie dieses unter Verwendung des erfindungsgemäßen Verfahrens ausgebildet ist und
- Fig. 6: eine zweite erfindungsgemäße Vorrichtung zum Verbinden zweier Bauteile mittels eines Laserstrahls in vereinfachter Seitenansicht.

Gleiche Bauteile bzw. Bauteile mit gleicher Funktion sind in den Figuren mit den gleichen Bezugsziffern versehen.

### Weiter auf ursprünglicher Beschreibungsseite 5

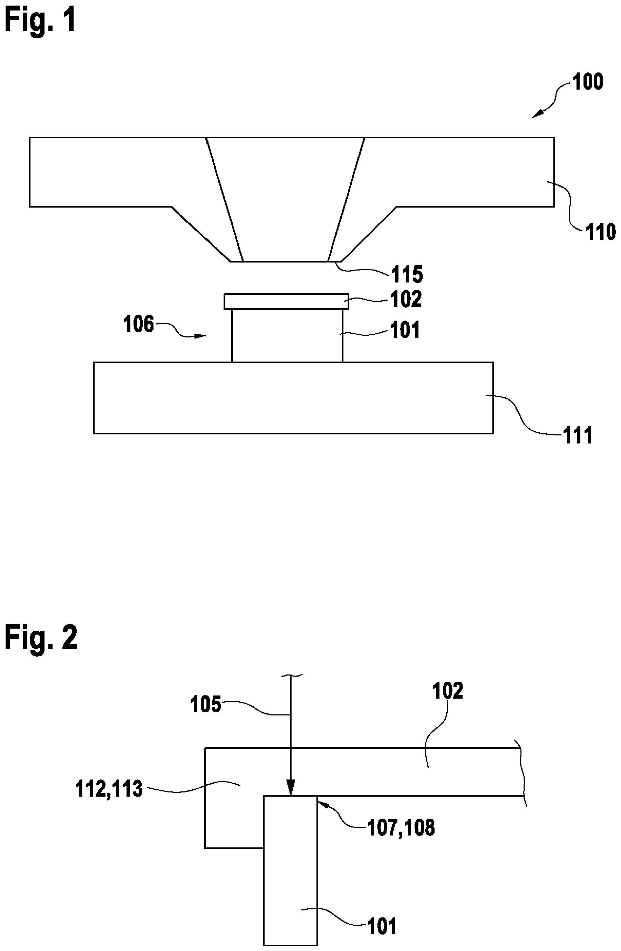

In der Fig. 1 ist stark vereinfacht eine Vorrichtung 100 zum Verbinden zweier Bauteile 101, 102 mittels eines Laserstrahls 105 dargestellt. Hierbei bilden die beiden Bauteile 101, 102 insbesondere ein Gehäuse 106 aus, das beispielsweise der Aufnahme von elektrischen oder elektronischen Bauteilen dient, und das nach dem Verschließen mittels des Laserstrahls 105 nach außen hin abgedichtet ist.

Das Bauteil 101 dient der Aufnahme der elektrischen bzw. elektronischen Bauteile (nicht dargestellt), während das Bauteil 102 ein Deckelelement zum Verschließen des Bauteils 101 bildet. Die beiden Bauteile 101, 102 sind im Bereich der oberen Stirnfläche 107 des Bauteils 101 im Bereich einer Fügezone 108 miteinander verbunden. Das Verbinden der beiden Bauteile 101, 102 erfolgt in an sich bekannter Art und Weise dadurch, dass der Laserstrahl 105, der von der Oberseite des Bauteils 102 auf das Bauteil 102 gerichtet wird, das für Laserstrahlung durchlässige Bauteil 102 durchdringt und in dem Bereich der Stirnfläche 107 des Bauteils 101, die für Laserstrahlung nicht durchlässig ist, das Material des Bauteils 101 aufschmilzt und anschließend, nach dem Erstarren, einen festen Verbund zwischen den beiden Bauteilen 101, 102 ausbildet.

Um die Prozesssicherheit beim Verbinden der beiden Bauteile 101, 102 sicherzustellen, weist die Vorrichtung 100 ein maskenartiges Niederhalteelement 110 auf, das aus der in der Fig. 1 beabstandeten Position zum Bauteil 102 in Anlagekontakt mit dem Bauteil 102 gebracht werden kann und zum Verschweißen der beiden Bauteile 101, 102 mit einer Axialkraft auf das Bauteil 102 drückt, sodass das Bauteil 102 vollflächig auf dem Bauteil 101 im Bereich der Stirnfläche 107 aufliegt. Hierzu ist es insbesondere auch vorgesehen, dass das Bauteil 101 auf einem Werkstückträger 111 angeordnet ist, der eine entsprechende Gegenkraft zur Niederhaltekraft des Niederhalteelements 110 aufbringt.

Wie insbesondere aus einer Zusammenschau der Fig. 1 und 2 erkennbar ist, weist das deckelartige Bauteil 102 eine Größe auf, die derart ist, dass der Randbereich 112 des Bauteils 102 die Stirnfläche 107 des Bauteils 101 nach außen hin überragt. Ferner ist erkennbar, dass das Bauteil 102 einen umlaufenden Randbereich 113 aufweist, der die Wand des Bauteils 101 überdeckt. Weiterhin hat das Niederhalteelement 110 einen Niederhaltebereich 115, der derart angeordnet ist, dass dieser insbesondere in Überdeckung mit dem Randbereich 113 angeordnet ist. Beim Erwärmen des Bauteils 101 kann somit Schweißgut aus der Fügezone 108 nach innen und nach außen gelangen, jedoch wird das nach außen tretende Schweißgut von dem Randbereich 113 des Bauteils 102 überdeckt und ist somit von außen nicht sichtbar.

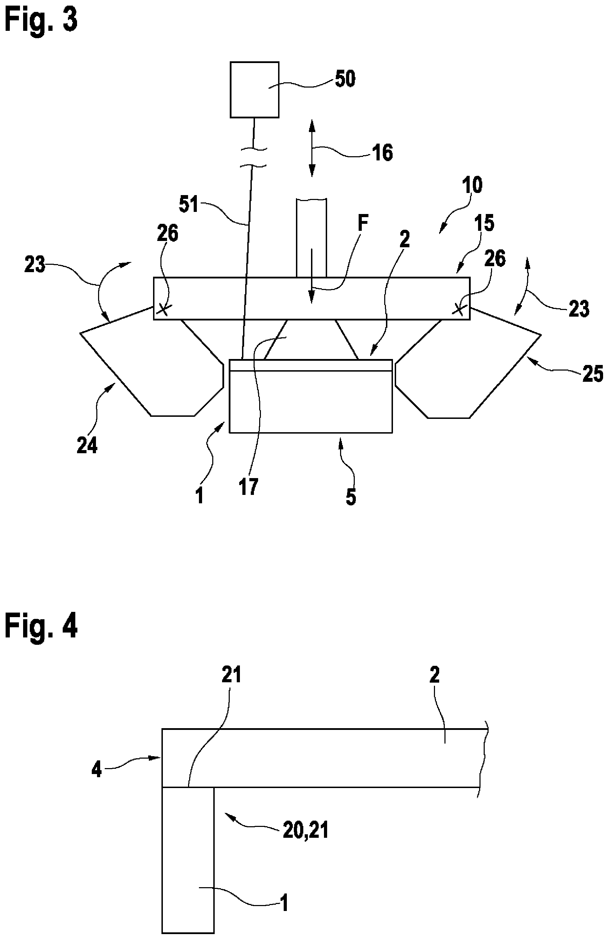

In der Fig. 3 ist eine erfindungsgemäße Vorrichtung 10 zum Verbinden von zwei Bauteilen 1, 2 dargestellt. Hierbei entspricht das Bauteil 1 dem Bauteil 101, während das Bauteil 2, im Gegensatz zum Bauteil 102 gemäß dem Stand der Technik, wie insbesondere anhand der Fig. 4 erkennbar ist, an seinem die Öffnung des Bauteils 1 begrenzenden Außenrand 4 in der Verbindungszone mit dem Bauteil 1 bündig mit dem Bauteil 1 abschließt. Das bedeutet, dass das Bauteil 2 im Gegensatz zum Bauteil 102 insbesondere keinen Randbereich aufweist bzw. dass die Dimensionierung eines aus den Bauteilen 1 und 2 bestehenden Gehäuses 5 im Verbindungsbereich der beiden Bauteile 1 und 2 durch die (gemeinsame) Größe des Bauteils 1 bestimmt wird.

In der Fig. 3 ist die Vorrichtung 10 näher dargestellt. Hierbei umfasst die Vorrichtung 10 ein Trägerelement 15, das im Ausführungsbeispiel plattenförmig ausgebildet ist und aus einer Glasplatte besteht. Die Glasplatte bzw. das Trägerelement ist somit für den Laserstrahl 51 durchlässig ausgebildet. Das Trägerelement 15 ist in Richtung des Doppelpfeils 16 relativ zu den beiden Bauteilen 1 und 2 bewegbar, und weist an seiner dem Bauteil 2 zugewandten Unterseite einen Niederhalter 17 auf, der im abgesenkten Zustand mit einer Kraft F auf das Bauteil 2 drückt, sodass sich im Bereich der Fügezone 20 (Fig. 4) ein Anlagekontakt zwischen den beiden Bauteilen 1 und 2 sichergestellt ist.

Wesentlich ist, dass die Größe bzw. die Auflage des Niederhalters 17 derart ist, dass sich dieser innerhalb der Grundfläche des Bauteils 2 und außer Deckung mit der Fügezone 20 befindet. Somit kann der von einer Laserstrahleinrichtung 50 erzeugte Laserstrahl 51, der im Wesentlichen senkrecht zu der dem Bauteil 2 zugewandten Stirnfläche des Bauteils 1 ausgerichtet ist, bei abgesenktem Niederhalter 17 das Trägerelement 15 und das für Laserlicht durchlässige Bauteil 2 durchdringen und den Randbereich 21 des Laserstrahlung absorbierenden Bauteils 1 im Bereich der Fügezone 20 erwärmen bzw. verflüssigen.

An dem Trägerelement 15 sind weiterhin beispielhaft zwei in Richtung der Doppelpfeile 23 schwenkbare, insgesamt einen Rahmen bildende Andrückelemente 24, 25 zur Vermeidung des Austretens von aus der Fügezone 22 austretender Schmelze nach außen angeordnet. Die in den Schwenkachsen 26, 27 gelagerten Andrückelemente 24, 25 sind dabei derart der Außenkontur der beiden Bauteile 1 und 2 im Bereich zumindest der Fügezone 20 angepasst, dass bei gegen die Bauteile 1 und 2 geschwenkten Andrückelementen 24, 25 diese im Bereich der Fügezone 20 von außen an den Bauteilen 1, 2 formschlüssig anliegen.

Die Funktion der soweit beschriebenen Vorrichtung 10 ist wie folgt: Zum Verschweißen der beiden Bauteile 1 und 2 wird das Trägerelement 15 bei zunächst weggeschwenkten Andrückelementen 24, 25 auf die beiden Bauteile 1, 2 abgesenkt, bis der Niederhalter 17 auf dem Bauteil 2 aufliegt. Dann werden die beiden Andrückelemente 24, 25 gegen die Bauteile 1, 2 verschwenkt, bis diese an der Außenseite der Bauteile 1, 2 im Bereich der Fügezone 20 anliegen. Durch das Anliegen der beiden Andrückelemente 24, 25 an den Bauteilen 1, 2 werden diese im Bereich der Fügezone 20 auch zueinander ausgerichtet bzw. positioniert. Anschließend werden die beiden Bauteile 1, 2 nach Aktivierung des Laserstrahls 51 unter Bildung einer Laserschweißnaht miteinander verschweißt. Zuletzt wird die Vorrichtung 10 nach Wegschwenken der beiden Andrückelemente 24, 25 wieder außer Deckung mit den beiden Bauteilen 1, 2 verbracht.

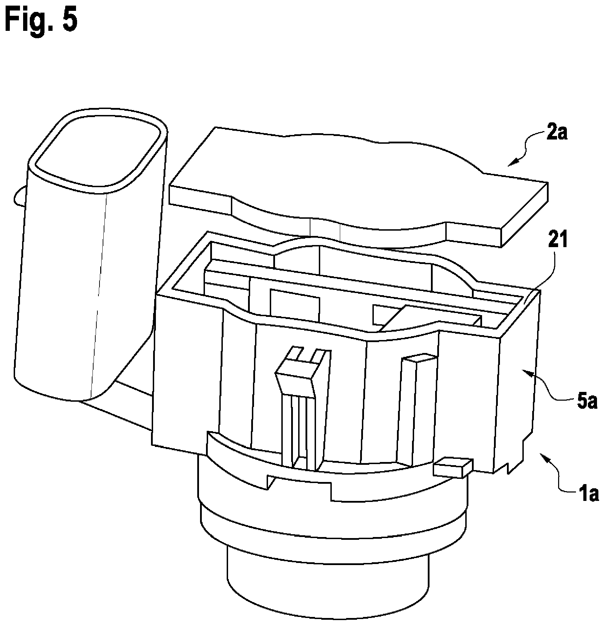

In der Fig. 5 ist in perspektivischer Ansicht beispielhaft ein Gehäuse 5a unter Verwendung zweier Bauteile 1a und 2a dargestellt. Im dargestellten Ausführungsbeispiel bildet das Gehäuse 5a dabei ein Gehäuse 5a aus, welches Teil eines Ultraschallsensors zur Montage in einem Stoßfänger eines Kraftfahrzeuges ist.

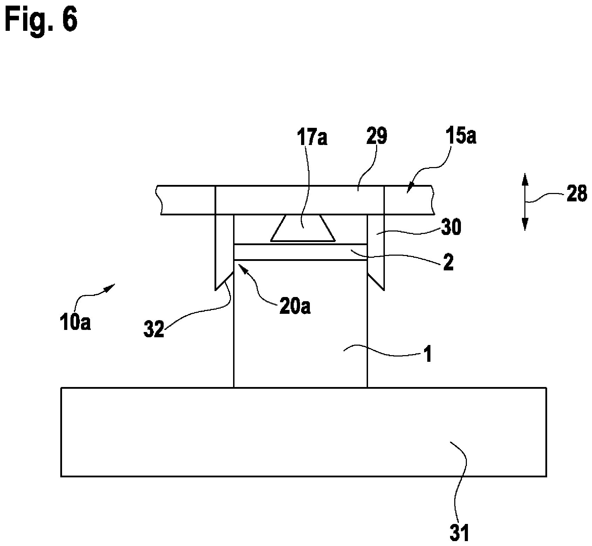

In der Fig. 6 ist eine gegenüber der Fig. 3 modifizierte Vorrichtung 10a dargestellt. Hierbei ist in dem entsprechend des Doppelpfeils 28 auf- und abbeweglichen Trägerelements 15a eine für den Laserstrahl durchlässige Glasplatte 29 eingespannt, an deren dem Bauteil 2 zugewandten Unterseite der Niederhalter 17a befestigt ist. Am Trägerelement 15a oder an der Glasplatte 29 ist ein Rahmenelement 30 befestigt, dessen Innenkontur der Außenkontur der beiden Bauteile 1, 2 in der Fügezone 20a derart angepasst ist, dass bei abgesenktem Rahmenelement 30 die Innenkontur des Rahmenelements 30 zumindest im Wesentlichen spaltfrei an den Bauteilen 1, 2 in der Fügezone 20a anliegt bzw. mit dieser abschließt. Somit wird beim Verschweißen der beiden Bauteile 1, 2, von denen das Bauteil 1 auf einem Sockel bzw. Werkstückträger 31 steht, der Austritt von Schweißgut aus der Fügezone 20a nach außen verhindert. Um das Absenken des Rahmenelements 30 auf die Bauteile 1, 2 zu erleichtern kann es vorgesehen sein, dass das Rahmenelement 30 eine der Zentrierung bzw. Führung dienende Einführschräge 32 aufweist.

## Patentansprüche

1. Vorrichtung (10; 10a) zum Verbinden zweier aus Kunststoff bestehender Bauteile (1; 1 a, 2; 2a) mittels eines Laserstrahls (51), wobei das erste Bauteil (1; 1a) einen eine Öffnung begrenzenden Randbereich (4) aufweist, der durch Anlagekontakt mit dem insbesondere als Deckelelement ausgebildeten zweiten Bauteil (2; 2a) mittels einer Laserschweißnaht in einer Fügezone (20; 20a) verbunden wird, wobei der von einer Laserstrahleinrichtung (50) erzeugte Laserstrahl (51) durch das zweite Bauteil (2; 2a) auf einen Randbereich (21) des ersten Bauteils (1; 1 a) einwirkt, wobei wenigstens ein von den Bauteilen (1; 1 a, 2; 2a) separates, insbesondere rahmenförmiges Abdichtelement (24, 25; 30) zur Vermeidung von aus der Fügezone (20; 20a) austretendem Schweißgut als Bestandteil der Vorrichtung (10; 10a) vorgesehen ist, und wobei das wenigstens eine Abdichtelement (24, 25; 30) an einem Trägerelement (15; 15a) zumindest mittelbar angeordnet und der Form der beiden Bauteile (1; 1a, 2; 2a) im Bereich der Fügezone (20; 20a) formschlüssig angepasst ist,
**dadurch gekennzeichnet,**
**dass** das wenigstens eine Abdichtelement (24, 25) vorzugsweise mehrteilig ausgebildet ist, und dass die Bestandteile des wenigstens einen Abdichtelements (24, 25) an dem Trägerelement (15) schwenkbar angeordnet sind, oder dass das Abdichtelement (30) einteilig ausgebildet ist und eine Zentrierhilfe zum Erleichtern des Entlangbewegens entlang der Außenkontur der Bauteile (1, 2), vorzugsweise in Form einer Einführschräge (32), aufweist.

2. Vorrichtung nach Anspruch 1,
**dadurch gekennzeichnet,**
**dass** das Trägerelement (15; 15a) beim Verbinden der beiden Bauteile (1; 1 a, 2; 2a) das zweite Bauteil (2; 2a) überdeckt und zumindest einen für den Laserstrahl (51) durchlässigen Bereich oder ein dafür geeignetes Bauteil (29) aufweist.

3. Vorrichtung nach Anspruch 2,
**dadurch gekennzeichnet,**
**dass** das Trägerelement (15; 15a) auf der dem zweiten Bauteil (2; 2a) zugewandten Seite ein Niederhalteelement (17; 17a) aufweist, und dass das Niederhalteelement (17; 17a) beim Verbinden der beiden Bauteile (1; 1a, 2; 2a) eine Auflage an dem zweiten Bauteil (2; 2a) bildet, die außer Deckung mit der Fügezone (20; 20a) angeordnet ist.

4. Verwendung einer Vorrichtung (10) nach einem der Ansprüche 1 bis 3 zum Verbinden zweier Bauteile (1; 1 a, 2; 2a) bei denen das zweite, insbesondere deckelförmige Bauteil (2; 2a) im Fügebereich (20; 20a) mit dem ersten Bauteil (1; 1a) eine Außenkontur (4) aufweist, die der Form des ersten Bauteils (1; 1a) angepasst ist und diese insbesondere nicht nach außen hin überragt.

5. Verwendung nach Anspruch 4,
**dadurch gekennzeichnet,**
**dass** die Bauteile (1; 1 a, 2; 2a) ein Gehäuse (5; 5a) für ein elektrisches oder elektronisches Gerät bilden.

## Claims

1. Device (10; 10a) for connecting two plastic components (1; 1a, 2; 2a) by means of a laser beam (51), wherein the first component (1; 1a) has a border region (4) which bounds an opening and is connected in a joining zone (20; 20a) by bearing contact by means of a laser weld seam to the second component (2, 2a) which is designed in particular as a cover element, wherein the laser beam (51) generated by a laser beam device (50) acts through the second component (2; 2a) onto a border region (21) of the first component (1; 1a), wherein at least one in particular frame-shaped sealing element (24, 25; 30) which is separate from the components (1; 1a, 2; 2a) and is intended for avoiding welding material escaping from the joining zone (20; 20a) is provided as part the device (10; 10a), and wherein the at least one sealing element (24, 25; 30) is at least indirectly arranged on a support element (15; 15a) and is adapted in a form-fitting manner to the shape of the two components (1; 1a, 2; 2a) in the region of the joining zone (20; 20a),
**characterized**
**in that** the at least one sealing element (24, 25) is preferably of multi-part design, and in that the components of the at least one sealing element (24, 25) are arranged pivotably on the support element (15), or in that the sealing element (30) is of single-part design and has centring aid, preferably in the form of an insertion slope (32), this facilitating the movement along the outer contour of the components (1, 2).

2. Device according to Claim 1, **characterized in that** the support element (15; 15a) covers the second component (2; 2a) when the two components (1; 1a, 2; 2a) are connected, and has at least one region which is penetratable by the laser beam (51) or a component (29) suitable therefore.

3. Device according to Claim 2, **characterized in that** the support element (15; 15a) has a holding-down element (17; 17a) on the side facing the second component (2; 2a), and **in that**, when the two components (1; 1a, 2; 2a) are connected, the holding-down element (17; 17a) forms a rest on the second component (2; 2a), the rest being arranged so as not to overlap with the joining zone (20; 20a).

4. Use of a device (10) according to one of Claims 1 to 3 for connecting two components (1; 1a, 2; 2a) in which the second, in particular cover-shaped component (2; 2a) in the joining region (20; 20a) to the first component (1; 1a) has an outer contour (4) which is adapted to the shape of the first component (1; 1a) and in particular does not protrude outward over said shape.

5. Use according to Claim 4, **characterized in that** the components (1; 1a, 2; 2a) form a housing (5; 5a) for an electric or electronic appliance.

## Revendications

1. Dispositif (10 ; 10a) destiné au raccordement de deux composants (1 ; 1a, 2 ; 2a) composés de matière plastique au moyen d'un faisceau laser (51), le premier composant (1 ; 1a) présentant une région de bord (4), limitant une ouverture, qui est raccordée par contact bout à bout au deuxième composant (2 ; 2a) constitué en particulier en tant qu'élément de couvercle, au moyen d'une soudure au laser dans une zone d'assemblage (20 ; 20a), le faisceau laser (51) produit par un système de faisceau laser (50) agissant à travers le deuxième composant (2 ; 2a) sur une région de bord (21) du premier composant (1 ; 1a), au moins un élément d'étanchéité (24, 25 ; 30) séparé des composants (1 ; 1a, 2 ; 2a), en particulier en forme de cadre, étant prévu en tant que composant du dispositif (10 ; 10a) pour éviter la sortie du métal fondu à partir de la zone d'assemblage (20 ; 20a), et l'élément d'étanchéité (24, 25 ; 30) au moins au nombre de un étant disposé au moins indirectement sur un élément de support (15 ; 15a) et étant adapté par liaison de forme à la forme des deux composants (1 ; 1a, 2 ; 2a) dans la région de la zone d'assemblage (20 ; 20a),
**caractérisé en ce que**
l'élément d'étanchéité (24, 25) au moins au nombre de un est de préférence constitué de plusieurs parties, et **en ce que** les composants de l'élément d'étanchéité (24, 25) au moins au nombre de un sont disposés en pivotement sur l'élément de support (15), ou **en ce que** l'élément d'étanchéité (30) est constitué d'une seule partie et présente une aide au centrage destinée à faciliter le mouvement le long du contour extérieur des composants (1, 2), de préférence sous la forme d'une pente d'introduction (32).

2. Dispositif selon la revendication 1,
**caractérisé en ce que** l'élément de support (15 ; 15a) recouvre le deuxième composant (2 ; 2a) lors du raccordement des deux composants (1 ; 1a, 2 ; 2a) et présente au moins une région perméable au faisceau laser (51) ou un composant (29) approprié pour cela.

3. Dispositif selon la revendication 2,
**caractérisé en ce que**
l'élément de support (15 ; 15a) présente un élément presseur (17 ; 17a) sur le côté tourné vers le deuxième composant (2 ; 2a), et **en ce que**, lors du raccordement des deux composants (1 ; 1a, 2 ; 2a), l'élément presseur (17 ; 17a) forme sur le deuxième composant (2 ; 2a) un appui qui est disposé de façon non coïncidente avec la zone d'assemblage (20 ; 20a).

4. Utilisation d'un dispositif (10) selon l'une des revendications 1 à 3 pour le raccordement des deux composants (1 ; 1a, 2 ; 2a) pour lesquels le deuxième composant (2 ; 2a), en particulier en forme de couvercle, présente dans la zone d'assemblage (20 ; 20a) avec le premier composant (1 ; 1a) un contour extérieur (4) qui est adapté à la forme du premier composant (1 ; 1a) et en particulier ne la dépasse pas vers l'extérieur.

5. Utilisation selon la revendication 4,
**caractérisée en ce que**
les composants (1 ; 1a, 2 ; 2a) forment un boîtier (5 ; 5a) pour un appareil électrique ou électronique.
